# EUROPÄISCHE PATENTSCHRIFT

(11) **EP 0 892 625 B1**
(45) Veröffentlichungstag und Bekanntmachung des Hinweises auf die Patenterteilung: **21.06.2000**
(21) Anmeldenummer: 97914030.8
(22) Anmeldetag: 08.04.1997
(51) Int. Cl.: A61C 19/04

(54) **VORRICHTUNG ZUM BESTIMMEN EINER APPROXIMALEN GÄNGIGKEIT EINES ZAHNZWISCHENRAUMS**
APPARATUS OF DETERMINING THE APPROXIMAL PASSABILITY OF AN INTERDENTAL SPACE
DISPOSITIF PERMETTANT DE DETERMINER L'ACCESSIBILITE PROXIMALE D'UN ESPACE INTERDENTAIRE

(30) Priorität: 10.04.1996 CH 90696
(43) Veröffentlichungstag der Anmeldung: 27.01.1999
(73) Patentinhaber: CURADEN AG, CH-6010 Kriens (CH)
(72) Erfinder: SEDELMAYER, Jiri, D-22159 Hamburg (DE)
(74) Vertreter: Roshardt, Werner Alfred, Dipl.-Phys.
(86) Internationale Anmeldenummer: CH9700137
(87) Internationale Veröffentlichungsnummer: WO9737612

(56) Entgegenhaltungen:
- WO-A-86/02532
- WO-A-88/04080
- FR-A- 2 597 327
- US-A- 4 959 014
- US-A- 5 178 537

## Beschreibung

### Stand der Technik

Die Reinigung der Zahnzwischenräume ist ein wichtiges Element der erfolgreichen Zahnpflege. Es sind deshalb Interdentalbürsten entwickelt worden, die im wesentlichen aus einem feinen Drahtstiel mit radial nach aussen ragenden Borsten bestehen, so dass sie in die Zahnzwischenräume eingeführt werden können.

Die Grösse der Zahnzwischenräume variiert nicht nur von Mensch zu Mensch, sondern auch in gewissem Mass innerhalb eines Gebisses.

Aus der US 4.959.014 beispielsweise ist ein Sondiergerät zum Messen der Abstände der Zähne bekannt, welches bei der Durchführung von Zahnstellungskorrekturen verwendet wird. Das bekannte Sondiergerät weist zu diesem Zweck mehrere zylindrische Abschnitte mit unterschiedlichen Durchmessern auf.

Weiter ist z. B. aus der US 5.178.537 ein Gerät zum Messen der Tiefe der periodontischen Tasche bekannt. Die Sondierspitze ist mit Farbringen versehen, um das Ablesen der Tiefe der Tasche zu ermöglichen. Die Sondierspitze ist als Wegwerfprodukt konzipiert, welches in eine Halterung eines Griffs gesteckt werden kann. In einer Verpackung sind z. B. 12 identische Sonden enthalten.

Für eine optimale Zahnpflege ist es wichtig, dass die richtige bzw. am besten angepasste Zahnbürste verwendet wird. Die Auswahl der geeigneten Bürste war für den Benutzer bisher eher eine Frage des Zufalls oder der mühsamen Erprobung verschiedenster Bürsten als eine Frage der zielstrebigen Bestimmung. Die Beratung durch fachkundiges Personal (Zahnarzt, Dentalhygienikerin etc.) könnte zwar grundsätzlich Abhilfe schaffen. Der Erfolg der Beratung und der empfohlenen Zahnpflege scheitert aber häufig an der Tatsache, dass der Patient nicht oder nur schwer nachvollziehen kann, was ihm gesagt wird. Die Motivation, die Zahnpflege zu Hause selbständig durchzuführen, geht entsprechend schnell verloren.

### Darstellung der Erfindung

Aufgabe der Erfindung ist es daher, Mittel zur Verfügung zu stellen, die es dem Berater eines Benutzers ermöglichen, das für die Reinigung der Zahnzwischenräume hinsichtlich Grösse und erforderlichenfalls Flexibilität etc. optimale Zahnreinigungsgerät (z. B. Interdentalbürsten) zu bestimmen.

Die erfindungsgemässe Lösung ist durch die Merkmale des Anspruchs 1 definiert.

Der Kerngedanke der Erfindung besteht darin, dass die approximale Gängigkeit des interessierenden Zahnzwischenraums gemessen wird. Zu diesem Zweck werden verschiedene Sondierelemente vorgegebener Parameter in den Zahnzwischenraum eingeführt. Die approximale Gängigkeit ist durch dasjenige Sondierelement (bzw. dessen Parameter) bestimmt, das gerade noch durch den Zahnzwischenraum durchgeführt werden kann.

Vorzugsweise werden alle Zahnzwischenräume ausgemessen und in einem Schema zuhanden des Benutzers eingetragen. Anstelle des Messwertes bzw. der approximalen Gängigkeit kann auch der entsprechende Typ einer Interdentalbürste eingetragen werden. Auf diese Weise erhält der Benutzer vom Berater die Information, mit welcher Interdentalbürste optimalerweise welche Zahnzwischenräume zu putzen sind.

Zur Durchführung des Verfahrens eignet sich insbesondere ein Gerät, an welchem die Sondierelemente in Form von Abschnitten unterschiedlicher Durchmesser verwirklicht sind. Der Durchmesser kann sich stufenweise oder kontinuierlich in Sondenlängsrichtung ändern. Mit Vorteil haben die Sondierelemente Biegeeigenschaften, die denjenigen von Interdentalbürsten entsprechen. Die Sondierelemente bestehen zweckmässigerweise aus einem Kunststoff (z. B. Polyamid), können aber auch aus Metall gefertigt sein.

Die Sondierelemente können aber auch in Form eines Sondensatzes mit mehreren eigenständigen Sondiergeräten unterschiedlicher Durchmesser verwirklicht sein. Zweckmässigerweise werden mehrere Sondiergeräte mit je mehreren Sondierelementen verwendet.

Die Sonden können fest oder auswechselbar mit einem Handgriff verbunden sein. Im erstgenannten Fall kann an jedem Ende eines länglichen Handgriffs je eine Sondierspitze angeordnet sein. Die Sondierspitzen sind dabei so ausgebildet, dass vollständig (oder zumindest teilweise) getrennte Durchmesserbereiche abgedeckt werden. Im zweitgenannten Fall kann die Sonde einen zum Einsetzen in einem Interdentalbürstenhalter ausgebildeten Kopf haben.

Weitere vorteilhafte Ausführungsformen und Merkmalskombinationen ergeben sich aus der nachfolgenden Detailbeschreibung und der Gesamtheit der Patentansprüche.

### Kurze Beschreibung der Zeichnungen

Die zur Erläuterung der Ausführungsbeispiele verwendeten Zeichnungen zeigen:
- Fig. 1: Eine schematische Darstellung eines Sondiergeräts mit kontinuierlich in Sondenlängsrichtung variierendem Durchmesser;
- Fig. 2: eine schematische Darstellung eines Instrumentes mit zwei Sondiergeräten;
- Fig. 3: eine schematische Darstellung eines Sondiergeräts des Instruments gemäss Fig. 2;
- Fig. 4: ein Schema zum Einzeichnen der gemessenen approximalen Gängigkeit.

Grundsätzlich sind in den Figuren gleiche Teile mit gleichen Bezugszeichen versehen.

### Wege zur Ausführung der Erfindung

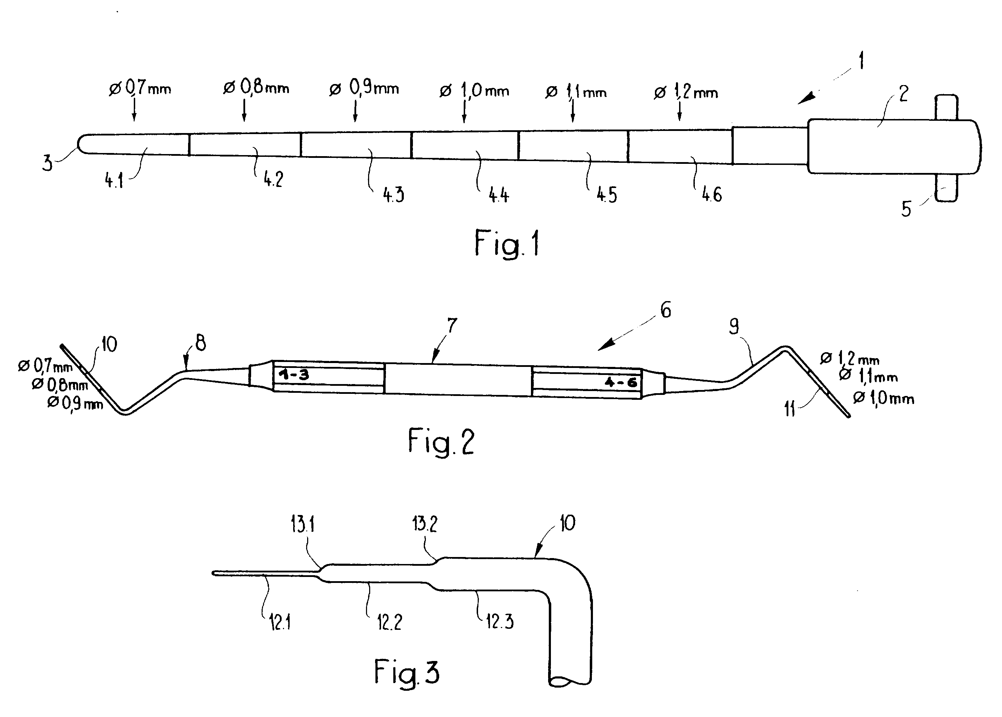

Fig. 1 zeigt ein Sondiergerät 1 mit einem Kopf 2, welcher an einem (nicht dargestellten) Halter auswechselbar befestigt werden kann. Das Befestigungselement 5 am Kopf 2 kann in der Art einer Traverse, eines Kragens oder eines sonstigen Querelements ausgebildet sein, welches die Verankerung des Kopfes in einer Halterung z. B. gemäss WO 86/02532 oder US-4,805,252 ermöglicht.

Das Sondiergerät 1 verfügt über eine lange dünne Sondierspitze 3 mit in Sondenlängsrichtung variierendem Durchmesser. Im vorliegenden Beispiel nimmt der Durchmesser kontinuierlich von hinten (d. h. vom Kopf 2 her) nach vorne ab. Es sind z. B. sechs Sondierelemente 4.1 bis 4.6 einer Länge von jeweils z. B. 3 mm gebildet. Der Durchmesser in der Mitte eines Sondierelements 4.1 bis 4.6 nimmt z. B. von hinten nach vorne um jeweils 1/10 mm zu. Das vorderste Sondierelement 4.1 hat z. B. einen mittleren Durchmesser von 0.7 mm und das hinterste Sondierelement 4.6 einen solchen von z. B. 1.2 mm.

Vorzugsweise sind die Sondierelemente 4.1 bis 4.6 farbcodiert. Die Sondierspitze 3 ist also in Längsrichtung in Abschnitte mit unterschiedlichen Farben unterteilt.

Die Länge eines Abschnittes sollte zumindest so gross sein wie die "Durchgangslänge" des Zahnzwischenraums in Sondierrichtung. D. h. ein Sondierelement sollte - sofern sein Durchmesser kleiner ist als die Gängigkeit des Zahnzwischenraums - vollständig durch den Zahnzwischenraum hindurchreichen.

Es ist zu beachten, dass die Zahnzwischenräume mitunter verwinkelt sein können (z. B. wenn eine konkave approximale Seite eines ersten Zahns an eine konvexe Approximalfläche eines zweiten Zahns anschliesst). Auch in einem solchen Fall muss eindeutig feststellbar sein, welches Sondierelement gerade noch vollständig durch den Zahnzwischenraum hindurchgeführt werden kann. Aus dem Gesagten ergibt sich auch, dass die Sondierelemente 4.1 bis 4.6 flexibel sein müssen. Dabei soll aber die Deformierbarkeit des Querschnitts minimal sein. Am besten wird die Sondierspitze 3 daher aus einem Kunststoff entsprechender Eigenschaften hergestellt (z. B. Polyamid).

Fig. 2 zeigt ein Instrument 6 mit einem Handgriff 7 und zwei Sondiergeräten 8, 9. Diese sind an den beiden Enden des Handgriffs 7 befestigt. Gemäss einer bevorzugten Ausführungsform sind sie abgewinkelt ausgebildet, um jeweils auch die Zahnzwischenräume der Backenzähne gut erreichen zu können. Die Sondiergeräte 8, 9 laufen in je eine Sondierspitze 10, 11 aus.

Fig. 3 zeigt in stark vergrösserter Darstellung beispielshalber die Sondierspitze 10. Sie verfügt z. B. über drei Sondierelemente 12.1, 12.2, 12.3 mit je unterschiedlichem Durchmesser. Jedes Sondierelement 12.1, 12.2, 12.3 hat jedoch über seine ganze Länge hinweg einen konstanten Durchmesser. D. h. das Sondierelement 12.1 hat z. B. einen konstanten Durchmesser von 0.7 mm, das Sondierelement 12.2 einen solchen von 0.8 mm und das dritte Sondierelement 12.3 einen solchen von 0.9 mm. Dazwischen werden stufenartige Uebergänge 13.1, 13.2 gebildet. Diese sind abgerundet. Zur leichteren optischen Erkennung können die Sondierelemente 12.1, 12.2, 12.3 unterschiedlich gefärbt sein. Sie können auch mit Farbringen codiert sein. Die Farbringe sind vorzugsweise auch an den entsprechenden Interdentalbürsten vorgesehen, welche vom Benutzer nach dem Bestimmen der approximalen Gängigkeit zu verwenden sind.

Die beiden Sondierspitzen 10 und 11 am Instrument 6 sind unterschiedlich ausgebildet. So kann z. B. die Sondierspitze 10 eine erste Durchmesserreihe (0.7 mm, 0.8 mm, 0.9 mm) und die zweite Sondierspitze 11 eine zweite Durchmesserreihe 1.0 mm, 1.1 mm, 1.2 mm) abdecken.

Denkbar ist aber auch, dass jede Sondierspitze einen konstanten Durchmesser über ihre ganze Länge hinweg hat (so dass nur ein Sondierelement verwirklicht wird). Zur Analyse eines Zahnzwischenraums bzw. eines ganzen Gebisses ist dann ein Satz von mehreren eigenständigen Sondierspitzen erforderlich.

Die erfindungsgemässe Benutzung der beschriebenen Geräte ist im Prinzip sehr einfach. Der Berater (Apotheker, Zahnarzt, Dentalhygieniker) misst die approximale Gängigkeit der Zahnzwischenräume, indem er die Sondierspitze in den Zahnzwischenraum einführt und feststellt, welches Sondierelement gerade noch durch den Zahnzwischenraum hindurchgeführt werden kann. U. U. muss er dafür mehrere Sondierspitzen in den Zahnzwischenraum einführen, bis er die Gängigkeit bestimmt hat. Beim Instrument 6 gemäss Fig. 2 braucht es z. B. nur eine Drehung, um zwischen zwei Sonden hin und her zu wechseln. Wenn an einer Sondierspitze nur ein Sondierelement ausgebildet ist, dann muss das Instrument u. U. im Verlauf einer Untersuchung mehrmals aus der Hand gelegt werden.

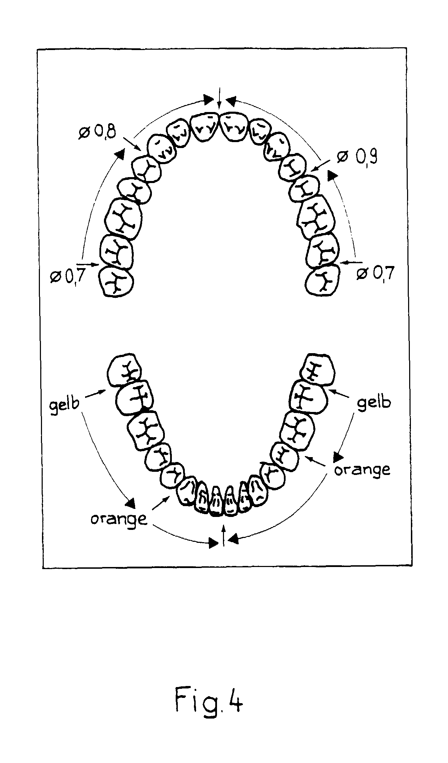

Um die ermittelten Werte in einer für den Benutzer leicht lesbaren Weise festzuhalten, können sie in einem an sich bekannten Gebiss-Schema (vgl. z. B. Fig. 4) bei den entsprechenden Zahnzwischenräumen eingezeichnet werden. Bei einer Farbcodierung können die entsprechenden Farben (vgl. "gelb", "orange" in Fig. 4) im Schema angegeben werden (welche vorzugsweise auch zur Bezeichnung des entsprechenden Bürsten-typs herstellerseitig verwendet werden).

Der Benutzer kauft dann die entsprechenden Interdentalbürsten und hat die Sicherheit, die optimale Wahl getroffen zu haben.

Nachdem es das erklärte Ziel der Erfindung ist, das optimale Interdentalreinigungsgerät zu bestimmen, ist es von Vorteil, wenn - wie erwähnt - herstellerseitig z. B. Interdentalbürsten mit einem Code der entsprechenden approximalen Gängigkeit gekennzeichnet werden.

Zusammenfassend ist festzuhalten, dass durch die Erfindung eine einfache Methode zur Bestimmung einer approximalen Gängigkeit geschaffen worden ist, womit es dem Benutzer möglich wird, das optimale Zahnreinigungsgerät einzusetzen. Auch die Instrumente zur Durchführung des Verfahrens sind technisch einfach ausgestaltet und leicht bedienbar.

## Patentansprüche

1. Gerätesatz umfassend eine Anzahl von unterschiedlichen Interdentalbürstentypen sowie mindestens ein Sondiergerät mit mehreren flexiblen Sondierelementen (4.1,..., 4.6; 12.1, ..., 12.3) mit unterschiedlichen Parametern zur Messung der approximalen Gängigkeit von Zahnzwischenräumen, wobei die Sondierelemente (4.1, ..., 4.6; 12.1, ..., 12.3) mit den unterschiedlichen Parametern auf die unterschiedlichen Interdentalbürstentypen abgestimmt sind, so dass durch Einführen des Sondiergeräts in einen Zahnzwischenraum unmittelbar die richtige Interdentalbürste ermittelt werden kann.

2. Gerätesatz nach Anspruch 1, dadurch gekennzeichnet, dass sich zur Schaffung unterschiedlicher Sondierelemente (4.1, ..., 4.6; 12.1, ..., 12.3) der Durchmesser in Sondenlängsrichtung kontinuierlich oder stufenweise ändert.

3. Gerätesatz nach einem der Ansprüche 1 oder 2, dadurch gekennzeichnet, dass das Sondiergerät einteilig aus einem flexiblen, aber nicht zusammendrückbaren Material, insbesondere einem Kunststoff gebildet ist.

4. Gerätesatz nach einem der Ansprüche 1 bis 3, dadurch gekennzeichnet, dass das Sondiergerät einen Kopf (2) zur auswechselbaren Befestigung an einer Halterung aufweist.

5. Gerätesatz nach einem der Ansprüche 1 bis 3, dadurch gekennzeichnet, dass das Sondiergerät über einen länglichen Handgriff (7) mit zwei Sondierspitzen (10, 11) verfügt und dass die Sondierelemente an beiden Sondierspitzen (10, 11) mit vollständig oder teilweise unterschiedlichen Durchmessern gebildet sind.

6. Gerätesatz nach einem der Ansprüche 1 bis 5 mit mindestens einem Gebiss-Schema, um für jeden Zahnzwischenraum die richtige Interdentalbürste einzeichnen zu können.

7. Gerätesatz nach einem der Ansprüche 1 bis 6, dadurch gekennzeichnet, daß die Sondierelemente (4.1,..., 4.6; 12.1, ..., 12.3) farbcodiert sind, so daß über die Farbcodierung beim Einführen des Sondiergeräts in einen Zahnzwischenraum unmittelbar die entsprechend codierte, richtige Interdentalbürste ermittelt werden kann.

8. Sondiergerät für einen Gerätesatz nach Anspruch 1, mit mehreren flexiblen Sondierelementen (4.1, ...,4.6; 12.1,..., 12.3) mit unterschiedlichen Parametern zur Messung der approximalen Gängigkeit von Zahnzwischenräumen, dadurch gekennzeichnet, daß die Sondierelemente (4.1, ...,4.6; 12.1,..., 12.3) mit den unterschiedlichen Parametern auf die unterschiedlichen Interdentalbürstentypen abgestimmt sind, so dass durch Einführen des Sondiergeräts in einen Zahnzwischenraum unmittelbar die richtige Interdentalbürste ermittelt werden kann.

9. Sondiergerät nach Anspruch 8, dadurch gekennzeichnet, daß die Sondierelemente (4.1,..., 4.6; 12.1,..., 12.3) farbcodiert sind, so daß über die Farbcodierung beim Einführen des Sondiergeräts in einen Zahnzwischenraum unmittelbar die entsprechend codierte, richtige Interdentalbürste ermittelt werden kann.

10. Sondiergerät nach einem der Ansprüche 8 oder 9, dadurch gekennzeichnet, daß sich zur Schaffung unterschiedlicher Sondierelemente (4.1,..., 4.6; 12.1,..., 12.3) der Durchmesser in Sondenlängsrichtung kontinuierlich oder stufenweise ändert.

11. Sondiergerät nach einem der Ansprüche 8 bis 10, dadurch gekennzeichnet, daß das Sondiergerät einteilig aus einem flexiblen aber nicht zusammendrückbaren Material, insbesondere einem Kunststoff gebildet ist.

12. Sondiergerät nach einem der Ansprüche 8 bis 11, dadurch gekennzeichnet, daß es einen Kopf (2) zur auswechselbaren Befestigung an einer Halterung aufweist.

13. Sondiergerät nach einem der Ansprüche 8 bis 12, dadurch gekennzeichnet, daß es über einen länglichen Handgriff (7) mit 2 Sondierspitzen (10, 11) verfügt und daß die Sondierelemente an beiden Sondierspitzen (10, 11 mit vollständig oder teilweise unterschiedlichen Durchmessern gebildet sind.

## Claims

1. Apparatus which comprises a number of different types of interdental brush and at least one probe device having several flexible probe elements (4.1,..., 4.6; 12.1,...,12.3) which have different parameters for the measurement of the approximal accessibility of interdental spaces, the probe elements (4.1, ..., 4.6; 12.1, ..., 12.3) which have the different parameters being co-ordinated with the different types of interdental brush so that it is possible to determine directly the correct interdental brush by insertion of the probe device into an interdental space.

2. Apparatus according to claim 1, characterised in that, in order to provide different probe elements (4.1,..., 4.6; 12.1,...,12.3), the diameter changes continuously or in a stepwise manner in the longitudinal direction of the probe.

3. Apparatus according to either claim 1 or claim 2, characterised in that the probe device is formed in one piece from a material which is flexible but not compressible, in particular a plastics material.

4. Apparatus according to any one of claims 1 to 3, characterised in that the probe device has a head (2) for fixing to a holder in a replaceable manner.

5. Apparatus according to any one of claims 1 to 3, characterised in that the probe device has an elongate handle (7) having two probe tips (10, 11), and in that the probe elements at both probe tips (10, 11) are formed with completely or partially different diameters.

6. Apparatus according to any one of claims 1 to 5, having at least one dentition diagram in order to be able to record the correct interdental brush for each interdental space.

7. Apparatus according to any one of claims 1 to 6, characterised in that the probe elements (4.1,..., 4.6; 12.1,...,12.3) are colour-coded so that it is possible to determine directly the correspondingly encoded, correct interdental brush by means of the colour coding when the probe device is inserted into an interdental space.

8. Probe device for an apparatus according to claim 1, having several flexible probe elements (4.1, ..., 4.6; 12.1,...,12.3) which have different parameters for the measurement of the approximal accessibility of interdental spaces, characterised in that the probe elements (4.1, ..., 4.6; 12.1,...,12.3) which have the different parameters are co-ordinated with the different types of interdental brush so that it is possible to determine the correct interdental brush by insertion of the probe device into an interdental space.

9. Probe device according to claim 8, characterised in that the probe elements (4.1, ..., 4.6; 12.1,...,12.3) are colour-coded so that it is possible to determine directly the correspondingly encoded, correct interdental brush by means of the colour coding when the probe device is inserted into an interdental space.

10. Probe device according to either claim 8 or claim 9, characterised in that, in order to provide different probe elements (4.1, ..., 4.6; 12.1,...,12.3), the diameter changes continuously or in a stepwise manner in the longitudinal direction of the probe.

11. Probe device according to any one of claims 8 to 10, characterised in that the probe device is formed in one piece from a material which is flexible but not compressible, in particular a plastics material.

12. Probe device according to any one of claims 8 to 11, characterised in that it has a head (2) for fixing to a holder in a replaceable manner.

13. Probe device according to any one of claims 8 to 12, characterised in that it has an elongate handle (7) having two probe tips (10, 11), and in that the probe elements at both probe tips (10, 11) are formed with completely or partially different diameters.

## Revendications

1. Appareillage comprenant une pluralité de types différents de brosses interdentaires ainsi qu'au moins un dispositif de sondage avec plusieurs éléments de sondage souples (4.1,..., 4.6; 12.1,...,l2.3) avec différents paramètres pour la mesure de l'accessibilité proximale des espaces interdentaires, les éléments de sondage (4.1,...,4.6; 12.1,...,12.3) étant ajustés par les différents paramètres aux différents types de brosses interdentaires de sorte que l'introduction de l'appareil de sondage dans un espace interdentaire permet de déterminer immédiatement la brosse interdentaire appropriée.

2. Appareillage selon la revendication 1, caractérisé en ce que pour créer différents éléments de sondage (4.1,...,4.6; 12.1,...,12.3) le diamètre dans la direction longitudinale de la sonde est modifié en continu ou en pas à pas.

3. Appareillage selon l'une des revendications 1 ou 2, caractérisé en ce que l'appareil de sondage est formé d'un seul tenant à partir d'un matériau souple mais non compressible, en particulier une matière synthétique.

4. Appareillage selon l'une des revendications 1 à 3, caractérisé en ce que l'appareil de sondage présente une tête (2) pour la fixation interchangeable sur un support.

5. Appareillage selon l'une des revendications 1 à 3, caractérisé en ce que le dispositif de sondage dispose d'une poignée oblongue (7) avec deux pointes de sondage (10,11) et en ce que les éléments de sondage sont formés sur les deux pointes de sondage (10,11) avec des diamètres totalement ou partiellement différents.

6. Appareillage selon l'une des revendications 1 à 5, avec au moins un schéma de dentition permettant de configurer la brosse interdentaire appropriée à chaque espace interdentaire.

7. Appareillage selon l'une des revendications 1 à 6, caractérisé en ce que les éléments de sondage (4.1, ..., 4.6;12.1,...,12.3) sont dotés d'un codage couleur permettant, lors de l'introduction du dispositif de sondage dans un espace interdentaire, de déterminer immédiatement au moyen du codage couleur la brosse interdentaire appropriée, codée de façon correspondante.

8. Dispositif de sondage pour un appareillage selon la revendication 1, comportant plusieurs éléments de sondage souples (4.1,...,4.6;12.1,...,12.3) avec différents paramètres pour la mesure de l'accessibilité proximale des espaces interdentaires, caractérisé en ce que les éléments de sondage (4.1,...,4.6;12.1,...,12.3) sont ajustés par les différents paramètres aux différents types de brosses interdentaires de sorte que l'introduction de l'appareil de sondage dans un espace interdentaire permet de déterminer immédiatement la brosse interdentaire appropriée.

9. Dispositif de sondage selon la revendication 8, caractérisé en ce que les éléments de sondage (4.1,...,4.6;12.1,...,12.3) sont dotés d'un codage couleur permettant, lors de l'introduction du dispositif de sondage dans un espace interdentaire, de déterminer immédiatement au moyen du codage couleur la brosse interdentaire appropriée, codée de façon correspondante.

10. Dispositif de sondage selon l'une des revendications 8 ou 9, caractérisé en ce que pour créer différents éléments de sondage (4.1,...,4.6;12.1,...,12.3) le diamètre dans la direction longitudinale de la sonde est modifié en continu ou en pas à pas.

11. Dispositif de sondage selon l'une des revendications 8 à 10, caractérisé en ce que le dispositif de sondage est formé d'un seul tenant à partir d'un matériau souple mais non compressible, en particulier une matière synthétique.

12. Dispositif de sondage selon l'une des revendications 8 à 11, caractérisé en ce qu'il présente une tête (2) pour la fixation interchangeable sur un support.

13. Dispositif de sondage selon l'une des revendications 8 à 12, caractérisé en ce qu'il dispose d'une poignée oblongue (7) avec deux pointes de sondage (10,11) et en ce que les éléments de sondage sont formés sur les deux pointes de sondage (10,11) avec des diamètres totalement ou partiellement différents.
